# EUROPEAN PATENT APPLICATION

(11) **EP 4 593 298 A1**
(43) Date of publication of application: **30.07.2025**
(21) Application number: 24153463.5
(22) Date of filing: 23.01.2024
(51) Int. Cl.: H04B 7/0426, H04B 7/06

(54) **A METHOD FOR INITIATING A BEAM CONTROL ACTION**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

The invention relates to a method (100) for initiating a beam control action, wherein an apparatus (10) comprises an antenna system (11), wherein a further apparatus (20) comprises a further antenna system (21), wherein the method (100) comprises the following steps performed at the apparatus (10):
- Providing (101) a connection to the further apparatus (20) via a first communication link,
- Determining (102) a prediction of a trajectory (1) of the apparatus (10) for a given time period, wherein the trajectory (1) is defined as the apparatus' and/or the antenna system's path based on space and time, in particular based on coordinates and on time points,
- Receiving (103) a signalling via the first communication link comprising a mobility awareness information of the further apparatus (20), wherein the mobility awareness information comprises a prediction of a further trajectory (2) of the further apparatus (20) for the given time period and a spatial configuration of the further antenna system (21),
wherein the spatial configuration of an antenna system comprises information regarding a geometry, an orientation and/or a configuration of the antenna system,
- Verifying (104) if a beam pair (15, 25) is connected between the two antenna systems (11, 21),
- Initiate (105) a beam control action depending on the result of the verification (103) via a second communication link.

Further, the invention refers to an apparatus, a system, and a computer program.

## Description

The invention relates to a method for initiating a beam control action. Furthermore, the invention relates to a computer program, an apparatus, a system, and a storage medium for this purpose.

### State of the art

The evolution of wireless technology has paved the way for the usage of 5G networks, promising further levels of speed, capacity, and connectivity. Central to the functionality of 5G is the utilization of different radio spectrum bands, each assigned to specific frequency ranges known as FR1, FR2, and FR3. These frequency ranges can play a role in enabling the diverse capabilities and performance of 5G networks. FR2, or Frequency Range 2, represents the higher frequency bands, specifically those in the millimeter wave (mmWave) range. Frequency range 2 (FR2) is a band of the radio spectrum that includes frequencies between 24.25 GHz and 71 GHz. FR2 offers immense bandwidth, enabling ultra-fast data speeds and significantly increased capacity. These frequencies can be for example helpful in high-demand scenarios where substantial amounts of data need to be transmitted simultaneously.

One of the key factors that enable the use of mmWave frequencies is a narrow beam width of a signal. Due to the short wavelength and the usage and characteristics of beamforming, more antennas can be placed closer together for example in an antenna array. However, the antenna beam width can be much narrower than at lower frequency bands such as in FR1. This allows a more precise targeting of a signal. Therefore, mmWave signals can be directed more efficiently towards specific devices, rather than spanning across a wide area. Further, such narrow antenna beams can reduce interference between different wireless nodes because each node can be directed to use a different beam direction. However, a drawback of a narrow beam is a higher risk of a possible beam detachment between two devices than in the lower frequency ranges. This circumstance can cause a sudden misalignment of beams and consequently can disrupt communication between devices. In the automotive area, especially in the area of autonomous driving, such a sudden disruption of the communication is not acceptable because a failure or misfunction could have serious consequences, such as an accident.

### Disclosure of the invention

It is therefore an object of the present invention to at least partially overcome the disadvantages described above. In particular, it is an object of the present invention, to provide a method to improve the predictive beam management. The above object is solved by a method with the features of claim 1, an apparatus with the features of claim 10, a system with the features of claim 11, a computer program with the features of claim 12 and a computer-readable storage medium with the features of claim 13. Further features and details of the invention are disclosed in the respective dependent claims, the description, and the drawings. Features and details described in connection with the inventive method also apply to the inventive apparatus as well as the inventive system, and vice versa in each case, so that with respect to the disclosure concerning the individual aspects of the invention reference can always be made mutually.

The object is particularly solved by a method for initiating a beam control action, wherein an apparatus comprises an antenna system, wherein a further apparatus comprises a further antenna system. The method comprises the following steps performed at the apparatus:
- Providing a connection to the further apparatus via a first communication link,
- Determining a prediction of a trajectory of the apparatus for a given time period, wherein the trajectory is defined as the apparatus' and/or the antenna system's path based on space and time, in particular based on coordinates and on time points,
- Receiving a signalling via the first communication link comprising a mobility awareness information of the further apparatus, wherein the mobility awareness information comprises a prediction of a further trajectory of the further apparatus for the given time period and a spatial configuration of the further antenna system,
   wherein the spatial configuration of an antenna system comprises information regarding a geometry, an orientation and/or a configuration of the antenna system,
- Verifying if a beam pair is connected between the two antenna systems,
- Initiate a beam control action depending on the result of the verification via a second communication link.

This has the advantage that the apparatuses, preferably vehicles, can advantageously exchange mobility awareness information via one communication channel at FR1, while controlling and/or managing one or more antenna beams via a different communication channel at FR2. Further, this allows that the apparatus is advantageously enabled to initiate proactively measures with respect to various beam control actions. Furthermore, the considering of mobility awareness information related to the apparatuses, preferably vehicles, mobility advantageously supports the apparatuses predicting necessary beam controlling based on the predicted trajectories. A trajectory refers to the path followed by an apparatus or vehicle through space and time. It describes the motion of the vehicle as it moves through space. The trajectory can have various shapes. For example, it can be a straight line or a curve or even a complex path depending on a traffic situation or on another condition. Further, trajectories can be two-dimensional, or three-dimensional, depending on the number of spatial dimensions involved in the vehicle's motion. Trajectories are time-dependent, meaning they describe the apparatuses position at different points in time. If all the initial conditions and forces acting on the object are known, the trajectory can be determined deterministically. This means that the object's position and velocity at any given time can be calculated. A mobility awareness information can be defined as information or data regarding the mobility characteristics of apparatuses such as vehicles within a communications network. This type of information can enable the vehicle to adapt and optimize its operation with regard to positioning or controlling the vehicle based on the movements of other vehicles. A spatial configuration of an antenna system refers a physical arrangement and orientation of its various elements and components in three-dimensional space. A spatial configuration of an antenna may comprise details such as for example a number or a positioning of antenna elements, distances and angles between antenna elements or parts. Further it may include information regarding the way the antenna is oriented in space, such as its azimuth and elevation angles, or regarding its radiation pattern.

It is possible that the verification comprises the further following steps:
- Checking if a beam is attached to the first antenna system of the first apparatus, and if the result of the checking is positive, the method proceeds with the step of initiating a beam control action, and
   if the result of the checking is negative, the method proceeds with a further checking if an attachment point is designated and/or reached, and
   if the result of the further checking is negative, the method proceeds with the following step:
      - Determining a possible attachment point for an attached beam pair based on the predicted trajectories of the antenna systems of the two apparatuses, and
         if the determining of the possible attachment point is successful, the method proceeds with the step of initiating a beam control action.

This allows to proactively examine the current situation dynamically regarding a beam management of the antenna system. Further, this has the effect that the appropriate action of activity to control one or more beams of the antenna system via the communication in the frequency range FR2.

It is possible that the initiating of the beam control action comprises the following step in case no beam pair is attached, and the attachment point is reached by the two apparatuses:
- Supporting a beam attachment and/or beam sweeping based on the spatial configuration of both antenna systems.

This allows to achieve a beam attachment in an efficient and fast way. Further, this has the advantage that a measure can be advantageously enabled to initiate proactively an action avoiding a beam detachment.

It is possible that the initiating of the beam control action comprises the following step in case a beam pair is attached:
- Detecting a detachment point based on the predicted trajectories and based on the spatial configuration of the antenna systems.

This has the advantage that a beam detachment can be possibly avoided based on the knowledge of the detected detachment point and dynamically initiate appropriate steps to extend the attachment period considering possible maintaining or supporting actions.

It is possible that the initiating of the beam control action comprises the following step in case the beam pair is attached:
- Maintaining the attached beam pair based on the spatial configuration of both antenna systems.

This allows the apparatus to maintain the attached beam pair with the further apparatus. Further, this has the advantage that the beam control action can be carried out considering the geometries of the antenna systems in an efficient way.

It is possible that a first beam of the attached beam pair is a wide beam at a Frequency Range 2, wherein the initiating comprises the further following step:
- Maintaining the attachment with the first beam by narrowing the first beam based on the first beam's coverage area and based on the spatial configuration of the antenna systems.

Narrowing the beam allows for much higher data rates based on the geometry and mobility information. Frequency Range 2 can be specified as a frequency range from 24 GHz to 53 GHz.

It is possible that each of the antenna systems comprises a multi antenna system, wherein the initiating of the beam control action comprises the further following step:
- Preparing a switch to another antenna pair of the multi antenna systems based on the predicted trajectories and based on the spatial configuration of the multi antenna systems.

This has the effect of avoiding a possible beam detachment on one hand or to keeping the attached status of the beams by enabling the switching to another antenna element of the multi antenna system.

It is possible that both of the apparatuses comprise a vehicle and/or one of the two apparatuses is a smart infrastructure unit.

This allows to flexibly use different devices such as Road Site Units (smart infrastructure), vehicles, pedestrians at a road network to enable the inventive method.

It is possible that the first communication link is operated in a frequency range from 450 MHz to 6 GHz, and/or the second communication link is operated in a frequency range from 24 GHz to 53 GHz.

This allows to increase the operational safety and/or efficiency of the inventive method based on the separated structured two-channel communication at different frequency ranges. The frequency range from 450 MHz to 6 GHz can be specified as Frequency Range 1 (FR1). The frequency range from 24 GHz to 53 GHz can be specified as Frequency Range 2 (FR2).

In another aspect of the invention an apparatus for initiating a beam control action may be provided, wherein the apparatus comprises an antenna system for using at least one beam and means for carrying out the inventive method. Thus, the apparatus according to the invention can have the same advantages as have been described in detail with reference to a method according to the invention.

In another aspect of the invention a system for initiating a beam control action may be provided, wherein the system comprises an apparatus and a further apparatus, wherein each of the apparatuses comprises an antenna system for using at least one beam, characterized in that the system is configured to carry out the steps of the inventive method. Thus, the system according to the invention can have the same advantages as have been described in detail with reference to a method according to the invention.

In another aspect of the invention a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

In another aspect of the invention an apparatus for data processing may be provided, which is configured to execute the method according to the invention. As the apparatus, for example, a computer can be provided, which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, computer program, a storage medium, apparatus, and system according to embodiments of the invention,
- Fig. 2: A schematic diagram according to embodiments of the invention,
- Fig. 3: A schematic diagram according to embodiments of the invention,
- Fig. 4: A schematic diagram according to embodiments of the invention, and
- Fig. 5: A schematic diagram according to embodiments of the invention.

The core of the invention refers to the usage of a mobility awareness information such as for example with respect to a speed, a heading, a steering, or an orientation. This awareness information is related to the mobility of a vehicle that is either available at an ego vehicle 10 using its own sensor perceiving its own awareness information conveyed to its own communication access layer or received through a communication link for example from a remote vehicle 20 sharing its mobility awareness information enabled by a communication link in FR1. Particularly, the information of interest is the predicted trajectories of the vehicles 10, 20 for a certain time, for example based on a curvature information, heading, direction, and/or speed available for example in the cooperative awareness message (CAM) or in the manoeuvre coordination message (MCM). The mobility information is then used for the beam management in FR2, that is, sweeping, attachment and detachment.

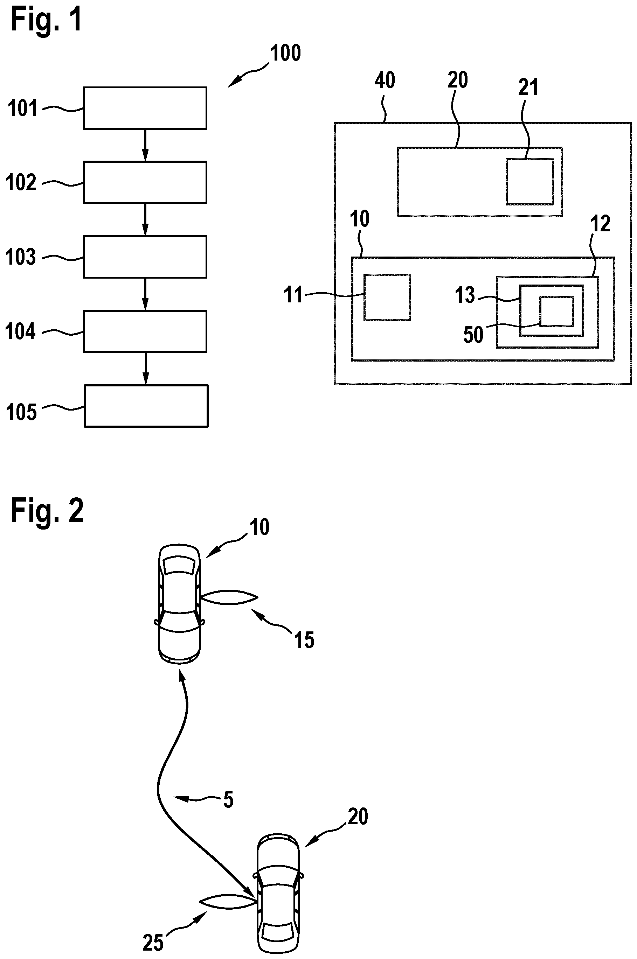

Fig. 1 illustrates a method, an apparatus, a system, a computer program, and a storage medium according to embodiments of the invention. In particular, Fig. 1 shows a method 100 for initiating a beam control action, wherein an apparatus 10 and a further apparatus each comprising an antenna system 11, 21. The method 100 comprises the following steps performed at the apparatus 10: At step 101 a connection to the further apparatus 20 is provided via a first communication link. In step 102 a prediction of a trajectory 1 of the apparatus 10 is determined for a given time period. The trajectory 1 is defined as the apparatus' and/or the antenna system's path based on space and time, in particular based on coordinates and on time points. At step 103 a signalling is received via the first communication link comprising a mobility awareness information of the further apparatus 20. The mobility awareness information comprises a prediction of a further trajectory 2 of the further apparatus 20 for the given time period and a spatial configuration of the further antenna system 21. The spatial configuration of an antenna system comprises information regarding a geometry, an orientation and/or a configuration of the antenna system. Then in step it is verified, if a beam pair 15, 25 is connected between the two antenna systems 11, 21. At step 105 a beam control action is initiated depending on the result of the verification 103 via a second communication link.

Further, Fig. 1 depicts a system 40 for initiating a beam control action. The system 40 comprises an apparatus 10 and a further apparatus 20, wherein each of the apparatuses 10, 20 comprises an antenna system 11, 21. The apparatus 10 comprises a computer 12 and a computer-readable storage medium 13 comprising a computer program 50.

Fig. 2 illustrates two vehicles 10, 20 approaching each other. Both vehicles 10, 20 are communicating via a communication link 5, operated in a frequency range FR1. The frequency range FR1 spans from 450 MHz to 6 GHz. It is primarily used for providing 5G services in urban and rural areas, offering good coverage and penetration. Further, there is a frequency range FR2. FR2 can span from 24.25 GHz to 52.6 GHz. This frequency range FR2 is primarily used for high capacity 5G applications in densely populated areas such as city centres. mmWave offers high data transmission rates but has a shorter range compared to FR1.

Both vehicles 10, 20 can exchange information via the established communication link 5 such as for example mobility awareness information, wherein this information can comprise predicted or planned trajectories and/or an information regarding an antenna orientation. Further, Fig. 2 depicts a beam 15, 25, in particular an antenna beam, which is originated from the respective antenna system 11, 21. In this embodiment both beams 15, 25 are not attached. In other words, the beam attachment is not possible in this configuration at this time. Using the communication link 5 in FR1, each of the vehicles 10, 20 can identify that the beam 15, 25 can be attached in the future.

The antenna system 11, 21 can comprise one antenna. It is possible that the antenna system 11, 21 can also comprise a multi antenna system or multiple antennas. The invention can then be extended with multiple antennas, which are then selected using the same information.

As shown in Fig. 2 both vehicles 10, 20 are communicating via the communication link 5 in the frequency range FR1. At the (first) vehicle 10 the following exemplary steps can be performed:
At a first step the vehicle 10 establish its own trajectory for a time period such as for example the next seconds. The determined trajectory can be forwarded to a lower layer or access layer either as quantized and/or mapped values.

In a next step the vehicle 10 can receive a mobility awareness information via the communication link 5. The received mobility awareness information may comprise a predicted trajectory for the next seconds of the further or remote vehicle 20. Further, this information can comprise an orientation information and/or a configuration information of the antenna system 21 of the remote vehicle 20. The mobility awareness information can be received for example via a V2X-message via the communication link 5.

Fig. 2 illustrates a possible situation in case no beam pair 15, 25 is attached and/or no designated attachment point is reached by either one of the vehicles 10, 20. Then for example the vehicle 10 can initiate a beam control action such as establishing a possible attachment point based on the predicted trajectories 1, 2 of the two antenna systems 11, 21 of the vehicles 10, 20.

In another example situation it can be the case that no beam pair 15, 25 is attached and/or the designated attachment point is reached by the vehicles 10, 20. Then, the vehicle 10 can initiate a beam control action such as supporting a beam sweeping and/or attachment of the beams 15, 25 based on the knowledge of the spatial configuration of both antenna systems 11, 21. This means that the vehicle 10 can use the known antennas geometry for initiating the supporting and/or attaching procedure. This beam control action can be initiated via a further communication or communication link at a frequency range FR2.

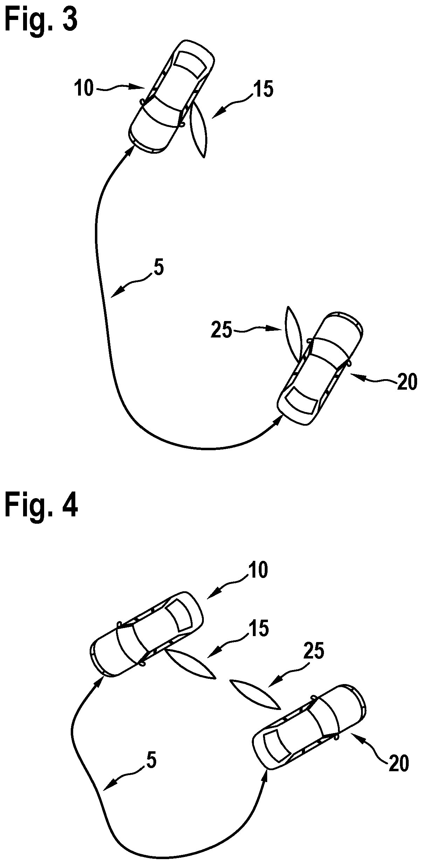

Fig. 3 depicts the possible situation that in case a beam pair 15, 25 is attached. Then, the vehicle 10 can initiate a beam control action such as maintaining the attached beams 15, 25 based on the knowledge of the spatial configuration of both antenna systems 11, 21. The beam control action can also be initiated via a further communication or communication link at a frequency range FR2.

Fig. 4 depicts the possible situation that in case a beam pair 15, 25 is attached and the vehicles 10, 20 have passed each other. Then, the vehicle 10 can initiate a beam control action such as detecting a detachment point based on the predicted trajectories (1, 2) and based on the spatial configuration of the antenna systems 11, 21.This means that this action can be carried out by leveraging the predicted trajectories and the antenna geometry of the antenna system 11, 21. The beam control action can be initiated via a further communication or communication link at a frequency range FR2.

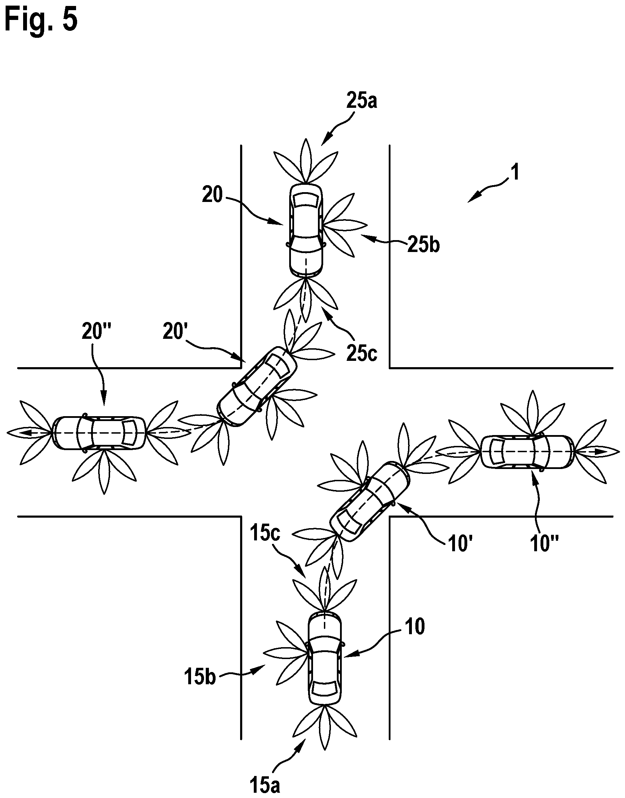

Fig. 5 illustrates an intersection of a road network that both vehicles 10, 20 are passing. In this embodiment each of the vehicles 10, 20 comprise a multi antenna system 11, 21. In Fig. 5 the possible situation is shown that the above mentioned beam control actions for the vehicle 10 as described for Fig. 2, 3 and 4 can be carried out for multi antenna systems. It is further possible that the vehicle 10 can initiate the beam control action such as preparing a switch to another antenna pair of the multi antenna systems 11, 21 based on the predicted trajectories 1, 2 and based on the spatial configuration of the multi antenna systems 11, 21. Therefore leveraging the predicted trajectories and each of the antenna geometry of the multi antenna system 11, 21. The beam control action can be initiated via a further communication or communication link at a frequency range FR2.

In another embodiment (not illustrated), a smart infrastructure unit instead of the vehicle 10 can for example can carry out the inventive method and for example can perform a trajectory prediction and can support the beam sweeping, beam attachment and/or beam detachment as described in the previous figures 1 to 5.

In another embodiment (not illustrated), the (first) attached beam 15 can comprise a wide beam 15 in the frequency range FR2. Wide beam refers to a type or characteristic of an antenna beam, which can be characterized by having a relatively broad or wide cross-sectional dimension compared to other beam types. The possible beam control action in such a case can be carried out as follows:
A cell-specific wide-coverage beam, used for covering a large geographical area of a cellular network, is tuned to a User Equipment (UE)-specific beam. UE-specific beam means that this beam is tailored to an individual UE's location and its requirements.

The cell-specific beam is used with synchronization signals to inform all new UEs about the beam patterns, during which the UE attach itself to the nearest wide beam. In other words, these signals are used for informing new User Equipments (U Es) in the cellular network about the existing beam patterns.

This UE-specific beam 15 is then continuously monitored for any failures. In case of a failure, mechanisms are in place for recovery, ensuring sustained and reliable communication. In summary, this beam control action can be used as a beamforming strategy where a broad, cell-wide beam 15 is initially used for a UE attachment, followed by a transition to a narrower, UE-specific beam 15 for more efficient and targeted communication.

In another embodiment, the (first) attached beam 15 can comprise a wide beam 15 in the frequency range FR2. This beam 15 can be narrowed for example using the known information about the antenna geometry. A wide beam does not require the knowledge of the relative geometry. Therefore, it can be easy to perform an attachment of the wide beam 15. In this embodiment, instead of establishing a first beam 15 or link in FR1 this beam 15 or link is established as a wide beam 15 in the frequency range FR2. Once this beam 15 or link is established, it is possible to exchange mobility and geometry information, which is used to initiate, manage, and maintain a narrow beam.

The above explanation of the embodiments describes the present invention in the context of examples. Of course, individual features of the embodiments can be freely combined with each other, provided that this is technically reasonable, without leaving the scope of the present invention.

## Claims

1. A method (100) for initiating a beam control action, wherein an apparatus (10) comprises an antenna system (11), wherein a further apparatus (20) comprises a further antenna system (21), wherein the method (100) comprises the following steps performed at the apparatus (10):
- Providing (101) a connection to the further apparatus (20) via a first communication link,
- Determining (102) a prediction of a trajectory (1) of the apparatus (10) for a given time period, wherein the trajectory (1) is defined as the apparatus' and/or the antenna system's path based on space and time, in particular based on coordinates and on time points,
- Receiving (103) a signalling via the first communication link comprising a mobility awareness information of the further apparatus (20), wherein the mobility awareness information comprises a prediction of a further trajectory (2) of the further apparatus (20) for the given time period and a spatial configuration of the further antenna system (21),
wherein the spatial configuration of an antenna system comprises information regarding a geometry, an orientation and/or a configuration of the antenna system,
- Verifying (104) if a beam pair (15, 25) is connected between the two antenna systems (11, 21),
- Initiate (105) a beam control action depending on the result of the verification (103) via a second communication link.

2. The method (100) of claim 1, **characterized in that** the verification (104) comprises the further following steps:
- Checking if a beam (15, 25) is attached to the first antenna system (11) of the first apparatus (10), and
if the result of the checking is positive, the method (100) proceeds with the step of initiating (105) a beam control action, and
if the result of the checking is negative, the method (100) proceeds with a further checking if an attachment point is designated and/or reached, and
if the result of the further checking is negative, the method (100) proceeds with the following step:
- Determining a possible attachment point for an attached beam pair (15,25) based on the predicted trajectories (1,2) of the antenna systems (11,21) of the two apparatuses (10, 20), and
if the determining of the possible attachment point is successful, the method (100) proceeds with the step of initiating (104) a beam control action.

3. The method (100) of any one of the preceding claims,
**characterized in that** the initiating (104) of the beam control action comprises the following step in case no beam pair (15, 25) is attached, and the attachment point is reached by the two apparatuses (10, 20):
- Supporting a beam attachment and/or beam sweeping based on the spatial configuration of both antenna systems (11, 21).

4. The method (100) of any one of the preceding claims,
**characterized in that** the initiating (104) of the beam control action comprises the following step in case the beam pair (15,25) is attached:
- Detecting a detachment point based on the predicted trajectories (1, 2) and based on the spatial configuration of the antenna systems (11,21).

5. The method (100) of any one of the preceding claims,
**characterized in that** the initiating (104) of the beam control action comprises the following step in case a beam pair (15,25) is attached:
- Maintaining the attached beam pair (15,25) based on the spatial configuration of both antenna systems (11,21).

6. The method (100) of any one of the preceding claims, **characterized in that**
a first beam of the attached beam pair is a wide beam at a Frequency Range 2,
wherein the initiating (104) comprises the further following step:
- Maintaining the attachment with the first beam (15) by narrowing the first beam (15) based on the first beam's coverage area and based on the spatial configuration of the antenna systems (11,21).

7. The method (100) of any one of the preceding claims, **characterized in that** each of the antenna systems (11,21) comprises a multi antenna system, wherein the initiating (105) of the beam control action comprises the further following step:
- Preparing a switch to another antenna pair of the multi antenna systems (11,21) based on the predicted trajectories (1,2) and based on the spatial configuration of the multi antenna systems (11, 21).

8. The method (100) of any one of the preceding claims, **characterized in that**
both of the apparatuses (10, 20) comprise a vehicle and/or one of the two apparatuses (10, 20) is a smart infrastructure unit.

9. The method (100) of any one of the preceding claims, **characterized in that** the first communication link is operated in a frequency range from 450 MHz to 6 GHz, and/or the second communication link is operated in a frequency range from 24 GHz to 53 GHz.

10. An apparatus (10) for initiating a beam control action comprising an antenna system (11) for using at least one beam and means for carrying out the method (100) of any one of the preceding claims.

11. A system (40) for initiating a beam control action, wherein the system (40) comprises an apparatus (10) and an further apparatus (20), wherein each of the apparatuses (10, 20) comprises an antenna system (11, 21) for using at least one beam, **characterized in that** the system (40) is configured to carry out the steps of the method (100) of any one of the claims 1 to 9.

12. A computer program (50), comprising instructions which, when the computer program (50) is executed by a computer (12), cause the computer (12) to carry out the method (100) of any one of claims 1 to 9.

13. A computer-readable storage medium (13) comprising instructions which, when executed by a computer (12), cause the computer (12) to carry out the steps of the method (100) of any one of claims 1 to 9.
